# EUROPÄISCHE PATENTSCHRIFT

(11) **EP 0 541 940 B1**
(45) Veröffentlichungstag und Bekanntmachung des Hinweises auf die Patenterteilung: **08.03.1995**
(21) Anmeldenummer: 92116584.1
(22) Anmeldetag: 28.09.1992
(51) Int. Cl.: E01C 19/48

(54) **Strassendecken-Fertiger**
Road paving machine
Finisseuse pour route

(30) Priorität: 22.10.1991 DE 4134840
(43) Veröffentlichungstag der Anmeldung: 19.05.1993
(73) Patentinhaber: Joseph Vögele AG, D-68146 Mannheim (DE)
(72) Erfinder: Braun, Arthur, W-6705 Deidesheim (DE)
(74) Vertreter: Grünecker, Kinkeldey, Stockmair & Schwanhäusser Anwaltssozietät

(56) Entgegenhaltungen:
- DD-A- 88 559
- DE-A- 3 611 268
- US-A- 4 934 864

## Beschreibung

Die Erfindung betrifft einen Straßendecken-Fertiger gemäß dem Oberbegriff des Patentanspruchs 1.

Bei einem aus der US-A-49 34 864 bekannten Straßendeckenfertiger sind beide Hinterräder an einem portalartigen Querträger an davon nach außen stehenden Achszapfen als Radträger gehaltert. Der Querträger ist an einem ersten portalartigen Überbau mittels eines in Fahrtrichtung liegenden Königszapfens schwenkbar abgestützt. Der zweite portalartige Überbau ist mit dem Längsrahmen bzw. Rahmenteilen verschweißt. Im Längsrahmen ist die Gutfördereinrichtung angeordnet. Die hydrostatische Antriebseinheit jedes Hinterrades ist an einer nach oben ragenden Konsole des ersten portalartigen Überbaus abgestützt und enthält neben einem Hydroverstellmotor einen Ketten-Reduktions-Getriebeabschnitt, der ein großes Kettenrad am Hinterrad treibt. Es liegen die Achszapfen deutlich oberhalb der Seitenränder der Gutfördereinrichtung, was übergroße Hinterräder erfordert. Die hochgesetzten hydrostatischen Antriebseinheiten beanspruchen oberhalb der Gutförderstrecke viel Bauraum. Mit einem nur eine Ketten-Reduktionsgetriebestufe treibendem Hydroverstellmotor läßt sich der in der Praxis erforderliche Geschwindigkeitsunterschied zwischen extrem langsamer Arbeitsfahrt und schneller Transportfahrt nicht beherrschen. Es beansprucht die portalartige Hinterradtragkonstruktion in Querrichtung und oberhalb der Gutförderstrecke unzweckmäßig viel Bauraum. Sie hat beträchtliches Gewicht. Dies steht dem Bestreben nach einem modernen kompakten und leichten Fertiger entgegen.

Bei einem aus DE-A1-36 11 268 bekannten Fertiger ist eine einzige hydrostatische Antriebseinheit mit einem Hydroverstellmotor mit Schaltgetriebe vorgesehen, das über eine querdurchgehende Getriebeachse mit in den Rädern angeordneten Planetenradsätze die Hinterräder treibt. Praktisch der gesamte Raum oberhalb der Gutförderstrecke wird von der Getriebeachse beansprucht, die ein großes Gewicht hat.

Bei einem aus US-A-35 43 654 bekannten Fertiger mmit Raupenantrieb werden die Raupenfahrwerke durch zwei getrennte hydraulische Motoren mit verstellbarer Verdrängung über je einen Kettentrieb und ein Reduziergetriebe angetrieben, wobei sich die hydrostatischen Fahrantriebseinheiten deutlich oberhalb der Gutförderstrecke befinden.

Bei einer aus dem DE-U-19 26 608 bekannten Treibachse für landwirtschaftliche Nutzfahrzeuge ist für jedes Antriebsrad ein Seitengetriebe vorgesehen. Die Seitengetriebe der Treibachse sind als Planetenradgetriebe ausgebildet, die je ein Antriebsrad über den Planetensteg treiben. Die Seitengetriebe mit ihren hydrostatischen Antriebsmotoren sind koaxial zu den Rädern und mit innenliegenden Bremswellen verbunden, so daß sich eine durchgehende Getriebeachse ergibt.

Es sind zwar von anderen Fahrzeugen hydrostatische Antriebssysteme bekannt (DE-A1-2 127 256, DE-A1-3 905 292, DE-A1-2 623 757, DE-A1-2 744 936, DE-A1-2 533 611). Diese Antriebssysteme sind jedoch für Straßendecken-Fertiger wegen des extremen Geschwindigkeitsunterschieds zwischen Arbeitsfahrt und Transportfährt und der hohen zu übertragenden Drehmomente nicht brauchbar.

Der Erfindung liegt die Aufgabe zugrunde, einen Straßendeckenfertiger der eingangs genannten Art zu schaffen, der sich durch einen gewicht- und raumsparenden Antrieb der Hinterräder auszeichnet.

Die gestellte Aufgabe wird erfindungsgemäß mit den im kennzeichnenden Teil des Patentanspruchs 1 enthaltenen Merkmalen gelöst.

Die beiden hydrostatischen Antriebseinheiten sind raumsparend und die Gutförderstrecke von außen oben übergreifend in den Unterbau des statischen Deckenfertigers eingegliedert. Das Planetenrad-Schaltgetriebe und der in das Hinterrad eingbaute Planetenradsatz ermöglichen eine extrem kompakte Bauweise mit dem Vorteil, bei kompakter Größe des Hydroverstellmotors die notwendigen extremen Geschwindigkeits- und Drehmomentunterschiede zwischen Arbeitsfahrt und Transportfahrt des Fertigers zu beherrschen. Der Anteil der hydrostatischen Antriebseinheiten am Gesamtgewicht des Straßendeckenfertigers kann wünschenswert gering gehalten werden. Es wird oberhalb der Gutförderstrecke kein nennenswerter Bauraum mehr benötigt. Ferner entfällt ein eigener Radträger, weil die hydrostatischen Antriebseinheiten selbst als Radträger fungieren.

Eine weitere Ausführungsform (Anspruch 2) ist montage-, wartungs- und reparaturtechnisch vorteilhaft. In Querrichtung des Fertigers ergibt sich eine gedrängte, kompakte Baugröße für die hydrostatische Antriebseinheit, wobei der im Hinterrad zur Verfügung stehende Einbauraum günstig genutzt wird. Die im Hinblick auf den Durchgang durch die Gutförderstrecke bewußt vorgesehene Achsversetzung wird auf einfache Weise durch den Reduktionsgetriebe-Abschnitt überbrückt, so daß der Planetenradsatz das Hinterrad direkt und mit niedriger Drehzahl antreibt.

Bei einer Ausführungsform (Anspruch 3) mit einem hydraulischen Differential ist mit steuerungstechnisch geringem Aufwand praktisch jede beliebige Verteilung der Drehmomente zwischen den beiden Fertigerseiten möglich. Bei Traktionsproblemen wird auch in Kurven mit dann leicht auf den Kurvenradius einstellbarer Differentialsperre gefahren.

Bei einer weiteren Ausführungsform (Anspruch 4) wird die Achslast günstig nahe an den Hinterrädern in den Unterbau übertragen.

Bei einer weiteren Ausführungsform (Anspruch 5) wird der im Hinterrad nutzbare Raum zur Unterbringung einer Bremse verwendet, wobei die Bremse ggfs. als Hilfs- bzw. Feststellbremse zusätzlich zu den Hydroverstellmotoren arbeitet.

Bei einer weiteren Ausführungsform (Anspruch 6) ist platzsparend eine Betriebsbremse vorgesehen, wobei jeder Hydroverstellmotor beim Bremsen durch eine Kraftfluß-Trennvorrichtung abgekuppelt werden kann.

Bei einer weiteren Ausführungsform (Anspruch 7) werden pro Fertigerseite zwei hintereinander liegende Hinterräder über je eine hydrostatische Antriebseinheit synchron angetrieben. Die Antriebseinheit fungiert als Radträger für jeweils beide Hinterräder einer Fertigerseite.

Bei einer weiteren Ausführungsform (Anspruch 8) lassen sich die weiteren Komponenten jeder Antriebseinheit am ersten Teil montieren. Dies spart Bauraum und Gewicht.

Bei einer weiteren baulich einfachen, kompakten Ausführungsform (Anspruch 9) sind die beweglichen Teile im Hinterrad gegen Verschmutzung abgeschirmt.

Bei einer weiteren Ausführungsform (Anspruch 10) wird die Bremse mit geringem baulichen Aufwand zwischen das Außengehäuse und das innere Getriebegehäuse eingesetzt, die sich im Betrieb relativ zueinander drehen, wobei das innere Getriebegehäuse das Bremsmoment an den Unterbau überträgt.

Der extreme Drehzahlunterschied der Hinterräder zwischen Arbeits- und Transportfahrt ist bei einer weiteren Ausführungsform (Anspruch 11) baulich einfach steuerbar.

Eine robuste und standfeste Ausführungsform (Anspruch 12) enthält eine Schiebehülsenkupplung, die leicht schaltbar und in der Lage ist, auch hohe Drehmomente und hohe Geschwindigkeitsunterschiede problemlos zu übertragen. Sie benötigt innerhalb der Antriebseinheit wenig Platz und ist wartungs- und verschleißarm.

Eine direkte Kraftübertragung vom Hydroverstellmotor in das Planetenrad-Schaltgetriebe ist bei einer weiteren Ausführungsform (Anspruch 13) gegeben. Der Hydroverstellmotor läßt sich rasch an- und abbauen.

Anhand der Zeichnung werden Ausführungsformen des Erfindungsgegenstandes erläutert. Es zeigt:
- Fig. 1: eine schematische Seitenansicht eines Straßendecken-Fertigers,
- Fig. 2: einen Teilschnitt in der Ebene II von Fig. 1,
- Fig. 3: eine vergrößerte Schnittansicht zu Fig. 2 mit schematisierter Getriebedarstellung,
- Fig. 4: einen Schnitt einer weiteren Ausführungsform, und
- Fig. 5: eine Draufsicht, teilweise im Schnitt zur Ausführungsform von Fig. 4.

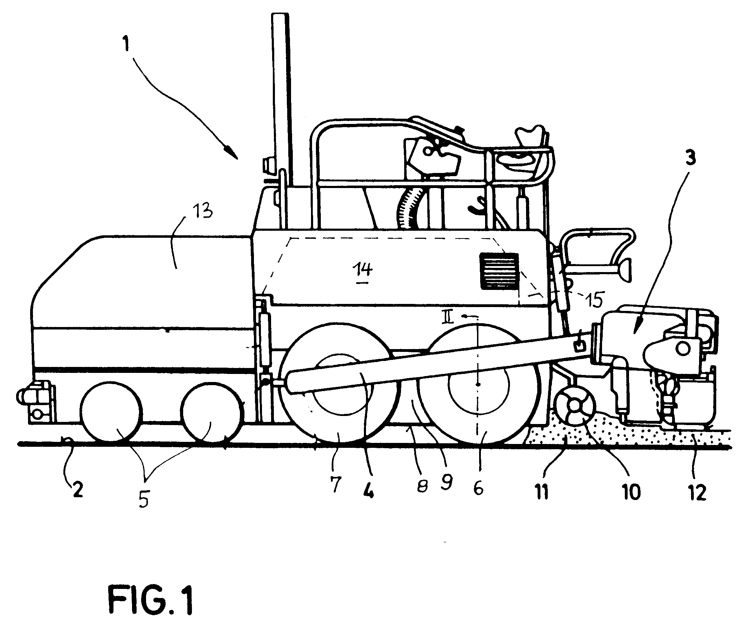

Ein Straßendecken-Fertiger 1 gemäß Fig. 1 dient zum Aufbringen einer Straßendecke 12 auf ein Planum 2. Der Fertiger 1 weist an jeder Fertigerseite zwei lenkbare Vorderräder 5 auf und schleppt mittels seitlicher Schwenkausleger 4 eine Einbaubohle 3. In einem Unterbau 8 erstreckt sich eine seitliche und mit dem Unterbau 8 verbundene Rahmenteile aufweisende Gutförderstrecke 9 von einem vorne liegenden Gutbunker 13 zu einem hinten liegenden Gutverteiler 10, der eine Gutvorlage 11 vor der Einbaubohle 3 auf das Planum 2 ablegt. Im Mittelteil des Fertigers 1 ist eine zentrale Antriebseinheit 14, zumeist ein Dieselmotor, untergebracht, der u.a. eine Hydraulikpumpe 15 treibt, die die hydraulische Antriebsenergie für mehrere Sekundärantriebe und auch für den Fahrantrieb des Fertigers bereitstellt. Der Fertiger 1 weist bei dieser Ausführung an jeder Fertigerseite zwei angetriebene Hinterräder 6, 7 auf, die über eine in Fig. 1 nicht-gezeigte hydrostatische Antriebseinrichtung 16 entweder mit Arbeitsfahr-Geschwindigkeit (z.B. ca. 6 m/min) oder mit Transportfahr-Geschwindigkeit (bis ca. 20 km/h) angetrieben werden.

Der Fertiger 1 könnte auch nur mit je einem lenkbaren Vorderrad 5 und einem angetriebenen Hinterrad 6 oder 7 pro Fertigerseite ausgestattet sein. Denkbar sind auch zwei angetriebene Hinterräder und nur ein lenkbares Vorderrad 5 pro Fertigerseite.

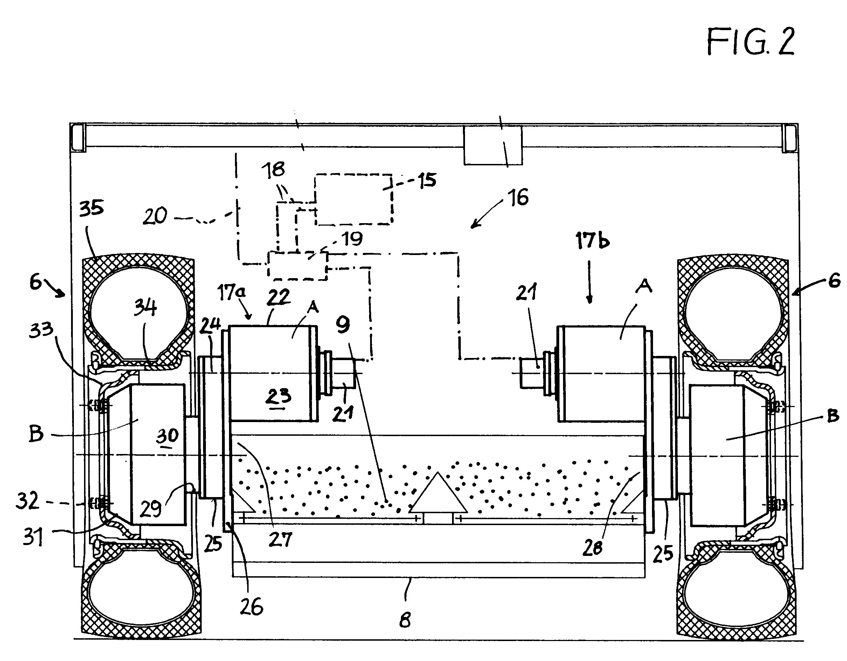

In Fig. 2 weist eine hydrostatische Antriebseinrichtung 16 je eine hydrostatische Antriebseinheit 17a und 17b pro Fertigerseite auf, die zum Teil in das Hinterrad 6 integriert ist. Die Hydraulikpumpe 15 ist über Leitungen 18 mit beiden hydrostatischen Antriebseinheiten 17a, 17b verbunden. Eine Steuer- oder Regeleinrichtung 19 (z.B. mit einem integrierten hydraulischen Differential, etwa in Form eines Mengenteilers), ist über eine Steuerverbindung 20 z.B. vom Führerstand aus ansteuerbar.

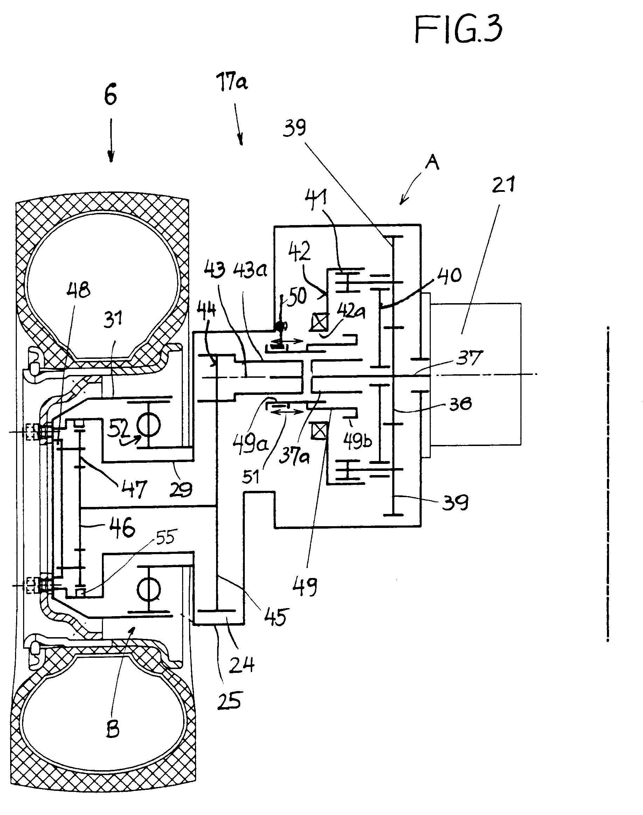

Beide Antriebseinheiten 17a, 17b sind baugleich jeweils aus zwei Teilen A und B zusammengesetzt, wobei am ersten Teil A ein Hydroverstellmotor 21 koaxial zur Getriebeachse des ersten Teils A angeflanscht ist. Der erste Teil A enthält in einem Getriebegehäuse 22 ein (s.Fig. 3) Planetenrad-Schaltgetriebe mit mindestens zwei Schaltstufen für die Arbeitsfahrt und die Transportfahrt. Ein Reduktionsgetriebe-Abschnitt 24 in einem Getriebegehäuse 25 verbindet den ersten Teil A mit dem zweiten Teil B. Der Reduktionsgetriebe-Abschnitt 25 ist mit einer Befestigungseinrichtung 26 am Unterbau 8 und/oder am Rahmen 27 bzw. 28 der Gutförderstrecke 9 montiert. Am Getriebegehäuse 25 ist ein Innengetriebegehäuse 29 des zweiten Teils B befestigt, das als Radträger dient und ein glockenförmiges Außengehäuse 31 treibt, an dem mit Befestigungselementen 32 eine Felgenschüssel 33 einer Felge 34 des mit einem Reifen 35 bestückten Hinterrades 6 befestigt ist. Im Innengetriebegehäuse 29 ist ein Planetenradsatz (Fig. 3) untergebracht. Zwischen den beiden hydrostatischen Antriebseinheiten 17a, 17b ist oberhalb der Gutförderstrecke 9 ein Zwischenraum 36 ausgespart.

Gemäß Fig. 3 treibt der Hydroverstellmotor 21 eine Eingangswelle 37 des Planetenrad-Schaltgetriebes 23. Auf der Eingangswelle 37 ist ein Sonnenrad 38 drehfest angebracht, mit dem Planetenräder 39 kämmen, die in einem auf der Eingangswelle 37 drehbaren Planetenrad-Träger 40 gelagert sind. Mit den Planetenrädern 39 drehfest verbundene, kleinere Planetenräder 41 kämmen mit einem innenverzahnten Planetenabtriebsrad 42, das im Getriebegehäuse 22 drehbar gelagert ist und eine Innenlängsverzahnung 42a aufweist. Koaxial zur Eingangswelle 37 ist im Getriebegehäuse 22 eine in den Reduktionsgetriebe-Abschnitt 24 reichende Ausgangswelle 43 gelagert, die drehfest ein kleines Zahnrad 44 trägt. Die Eingangswelle 37 und die Ausgangswelle 43 besitzen Außen-Längsverzahnungen 43a, 37a, auf denen eine Kupplungs-Schiebehülse 49 einer Schaltkupplung K mittels eines Stellhebels 50 hin- und herverschiebbar ist. Die Schiebehülse 49 besitzt eine Innenlängsverzahnung 49a und eine Außenlängsverzahnung 49b. In der dargestellten Schaltstellung der Kupplung K kuppelt die Schiebehülse 49 die Eingangswelle 37 direkt mit der Ausgangswelle 43. Das Planetenabtriebsrad 42 läuft leer. Die Antriebsdrehzahl und das Drehmoment des Hydroverstellmotors 21 werden direkt auf die Ausgangswelle 43 übertragen. Mit dem Zahnrad 44 kämmt ein größeres Zahnrad 45 im Getriebegehäuse 25, das ein Sonnenrad 46 im Planetenradsatz 30 im Innengetriebegehäuse 29 treibt. Mit dem Sonnenrad 46 kämmen Planetenräder 47, die in einem Planetenradsteg 48 gelagert sind. Mit dem Planetenradsteg 48 ist das glockenförmige Außengehäuse 31 verbunden, an dem das Hinterrad 6 lösbar befestigt ist. Das Außengehäuse 31 greift nach innen über das eine Innenverzahnung 55 für die Planetenräder 47 tragende Innengetriebegehäuse 29. In dem auf diese Weise gebildeten Raum ist eine Bremse 52 untergebracht, die entweder als Betriebs- oder als Hilfsbremse ausgelegt ist. Dient die Bremse 52 als Betriebsbremse, dann sollte die Kupplung K in eine Trennstellung schaltbar sein, um für die Betriebsbremsung den Kraftfluß vom Hydroverstellmotor 21 zum Hinterrad zu unterbrechen. Dient die Bremse 52 als Hilfs- oder Feststellbremse, dann wird der Hydroverstellmotor 21 zusätzlich als Betriebsbremse benutzt. Zwischen dem zweiten Teil B und dem ersten Teil A der hydrostatischen Antriebseinheit 17a ist eine Achsversetzung nach oben vorgesehen, die vom Reduktionsgetriebe-Abschnitt 24 überbrückt wird. Strichpunktiert ist die Fertigerlängsmittelachse angedeutet, in deren Bereich zwischen den beiden hydrostatischen Antriebseinheiten 17a, 17b der Zwischenraum 36 ausgespart ist. Bei einer konkreten Ausführungsform ist der Aufbau der hydrostatischen Antriebseinheit 17a, 17b so kompakt, daß jede Antriebseinheit nur ca. 450 mm über die Innenseite des Hinterrades 6 nach innen ragt.

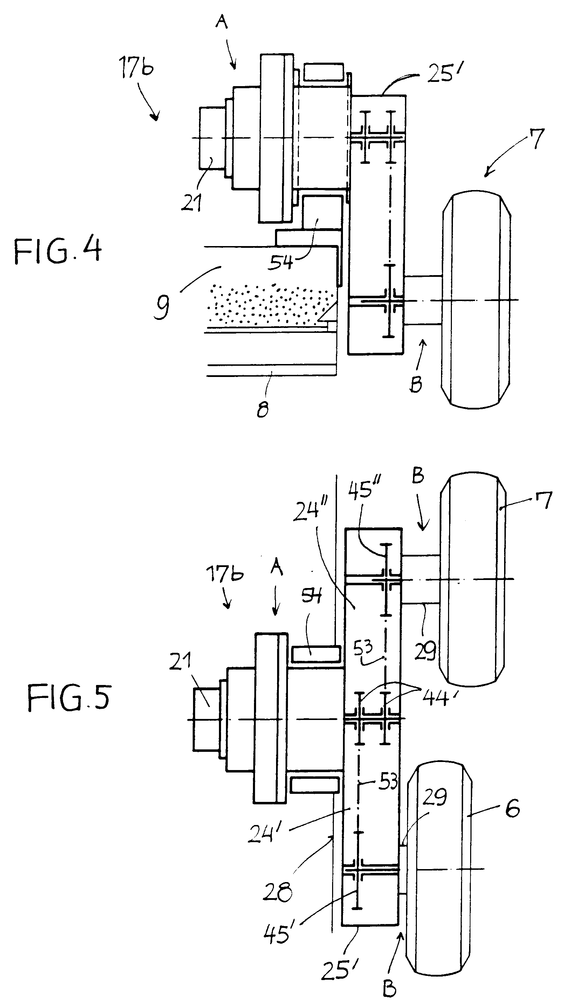

Gemäß Fig. 4 und 5 sind pro Fertigerseite die beiden in Fig. 1 gezeigten, getriebenen Hinterräder 7, 6 vorgesehen. Für beide Hinterräder 6, 7 ist eine gemeinsame hydrostatische Antriebseinheit, z.B. 17b, vorgesehen, deren Hydroverstellmotor 21 an den ersten Teil A angeflanscht ist. Im Unterschied zur Ausführungsform der Fig. 2 und 3 ist der erste Teil A der hydrostatischen Antriebseinheit 17b mit einer Befestigungseinrichtung 54 im Unterbau 8 und/oder am Rahmenbereich der Gutförderstrecke 9 festgelegt, so daß das Getriebegehäuse 25' und der zweite Teil B der Antriebseinheit vom ersten Teil A abgestützt werden. In dem Getriebegehäuse 25' sind zwei Reduktionsgetriebe-Abschnitte 24' und 24'' angeordnet, in denen Kettenräder 44' über Antriebsketten 53 Kettenräder 45'', 45' für jedes Hinterrad 6, 7 antreiben, wobei in den Innengetriebegehäusen 29 Planetenradsätze und gegebenenfalls Bremsen vorgesehen sind, analog zu Fig. 3. Anstelle der Kettentriebe könnten auch Zahnrad-Reduktionsgetriebe-Abschnitte vorgesehen sein. Das Getriebegehäuse 25' fungiert als Radträger für beide Hinterräder 6, 7.

Bei Transportfahrt gemäß Fig. 3 läuft das Planetenabtriebsrad 42 leer. Das Drehmoment und die Drehzahl wird direkt über die Schiebehülse 49 übertragen. Zum Umstellen auf Arbeitsfahrt wird die Schiebehülse 49 in Fig. 3 nach links verschoben, bis die Innenlängsverzahnung 49a von der Außenlängsverzahnung 37a freikommt und die Außenlängsverzahnung 49b in die Innenlängsverzahnung 42a eingreift. Dann wird die Ausgangswelle 43 mit der Stegübersetzung des Planetenrad-Schaltgetriebes 23 angetrieben, d.h. das Sonnenrad 38 treibt die Planetenräder 39, die untersetzend über die Planetenräder 41 das Planetenabtriebsrad 42 langsam drehen, dessen Drehzahl und Drehmoment über die Schiebehülse 49 auf die Ausgangswelle 43 übertragen wird.

## Patentansprüche

1. Straßendecken-Fertiger (1) mit Reifenfahrwerk, mit einem eine längsdurchgehende Gutförderstrecke (9), ein zentrales Antriebsmotor-Pumpenaggregat (14, 15), lenkbare Vorderräder (5) sowie getriebene Hinterräder (6, 7) aufweisenden Unterbau (8),
wobei für jede Hinterradseite eine eigene hydrostatische Antriebseinheit (17a, 17b) mit einem Hydroverstellmotor (21) und ein jedes Hinterrad (6, 7) direkt treibendes Reduktionsgetriebe vorgesehen ist, **dadurch gekennzeichnet**, daß jede hydrostatische Antriebseinheit (17a, 17b) ein zwischen extrem langsamer Arbeitsfahrt und schneller Transportfahrt umschaltbares, vom Hydroverstellmotor (21) getriebenes, Planetenrad-Schaltgetriebe (23) und einen in das Hinterrad (6, 7) eingebauten Planetenradsatz (46, 47, 48, 31) aufweist und als Hinterradträger ausgebildet ist, der an einer Fertigerseite am Unterbau (8) und/oder an der Gutförderstrecke (9) befestigt ist und die Gutförderstrecke (9) außen von oben übergreift.

2. Fertiger nach Anspruch 1, **dadurch gekennzeichnet**, daß jede hydrostatische Antriebseinheit (17a, 17b) aus zwei über einen Reduktionsgetriebeabschnitt (24) verbundenen Teilen (A, B) besteht, daß der erste Teil (A) das Planetenrad-Schaltgetriebe (23) mit dem Hydro-Verstellmotor (21) aufweist, daß der zweite, den das Hinterrad (6, 7) direkt treibende Planetenradsatz (46, 47, 48) enthaltende Teil (B) in das Hinterrad (6, 7) eingebaut ist, daß der erste Teil (A) relativ zur Radachse und relativ zum zweiten Teil (B) über die Gutförderstrecke (9) nach oben achsversetzt ist, und daß die Achsversetzung durch den Reduktionsgetriebe-Abschnitt (24) überbrückt ist, der zwischen der Seitenbegrenzung der Gutförderstrecke (9) und der Innenseite des Hinterrads (6, 7) liegt.

3. Fertiger nach den Ansprüchen 1 und 2, **dadurch gekennzeichnet**, daß die beiden hydrostatischen Antriebseinheiten (17a, 17b) durch ein hydraulisches Differential (19) koppelbar sind.

4. Fertiger nach Anspruch 2, **dadurch gekennzeichnet**, daß der Reduktionsgetriebe-Abschnitt (24) am Unterbau (8) und/oder an der Gutförderstrecke (9) befestigt ist.

5. Fertiger nach den Ansprüchen 1 und 2, **dadurch gekennzeichnet**, daß zwischen dem zweiten Teil (B) der hydrostatischen Antriebseinheit (17a, 17b) und dem Hinterrad (6, 7), vorzugsweise im im Hinterrad (6, 7) angeordneten zweiten Teil (B), eine Bremse (52) als zumindest Hilfs- bzw. Feststellbremse vorgesehen ist.

6. Fertiger nach Anspruch 5, **dadurch gekennzeichnet**, daß zwischen der Bremse (52) und dem Hydroverstellmotor (21) eine Kraftfluß-Trennvorrichtung, z.B. eine steuerbare Kupplung, vorgesehen ist, und daß die Bremse (52) als Betriebsbremse des Fertigers (1) ausgebildet ist.

7. Fertiger nach den Ansprüchen 1 und 2, **dadurch gekennzeichnet**, daß pro Fertigerseite zwei hintereinander liegende, getriebene Hinterräder (6, 7) mit je einem in en Rad (6, 7) eingebauten zweiten Teil (B) der hydrostatischen Antriebseinheit (17a, 17b) vorgesehen sind, und daß der beiden Hinterrädern (6, 7) einer Fertigerseite gemeinsame erste Teil (A) der hydrostatischen Antriebseinheit (17a, 17b) mit den zwei zweiten Teilen (B) über je einen Ketten- oder Zahnrad-Reduktionsgetriebe-Abschnitt (24, 24', 24'') verbunden ist.

8. Fertiger nach den Ansprüchen 1, 2, 7 **dadurch gekennzeichnet**, daß der erste Teil (A) der hydrostatischen Antriebseinheit (17a, 17b) mit seinem Getriebegehäuse (22) am Unterbau (8) und/oder an der Gutförderstrecke (9) befestigt ist.

9. Fertiger nach den Ansprüchen 1 bis 8, **dadurch gekennzeichnet**, daß der zweite Teil (B) der hydrostatischen Antriebseinheit (17a, 17b) ein glockenförmiges und mit einer Felgenschüssel (33) des Hinterrads (6, 7) verbundenes Außengehäuse (31) aufweist, das ein mit dem Getriebegehäuse (25, 25') des Reduktionsgetriebe-Abschnitts (24, 24', 24'') fest verbundenes inneres Getriebegehäuse (29) übergreift.

10. Fertiger nach den Ansprüchen 5, 6 und 9, **dadurch gekennzeichnet**, daß die Bremse (52) zwischen dem Außengehäuse (31) und dem inneren Getriebegehäuse (29) angeordnet ist.

11. Fertiger nach den Ansprüchen 1 bis 10, **dadurch gekennzeichnet**, daß im Planetenrad-Schaltgetriebe (23) eine zwischen einer Stegübersetzungs- (Arbeitsfahrt) und einer Überbrückungsstellung (Transportfahrt), und gegebenenfalls einer Trennstellung, umschaltbare Kupplung (K) vorgesehen ist.

12. Fertiger nach Anspruch 11, **dadurch gekennzeichnet**, daß die Kupplung (K) eine innen und außen längsverzahnte Schiebehülse (49) aufweist, die innerhalb eines innen längsverzahnten Planetenabtriebsrades (42) auf einer längsverzahnten Eingangswelle (37) und einer anschließenden, längsverzahnten und koaxialen Ausgangswelle (43) zum Reduktionsgetriebe-Abschnitt (24) verschiebbar geführt ist, die in der Stegübersetzungsstellung der Kupplung (K) das Planetenabtriebsrad (42) mit der Ausgangswelle (43) und in der Überbrückungsstellung die Eingangswelle (37) unter Umgehung des Planetenabtriebsrades (42) direkt mit der Ausgangswelle (43) kuppelt.

13. Fertiger nach den Ansprüchen 1 und 12, **dadurch gekennzeichnet**, daß der Hydroverstellmotor (21) koaxial zur Eingangswelle (37) an den ersten Teil (A) der hydrostatischen Antriebseinheit (17a, 17b) angeflanscht ist.

## Claims

1. A road finisher (1) comprising running gear on tyres and with a substructure (8) comprising a continuous longitudinal material-conveying track (9), a central drive motor and pump unit (14, 15), steerable front wheels (5) and driven rear wheels (6, 7), a separate hydrostatic drive unit (17a, 17b) being provided on each rear-wheel side and comprising a hydraulic adjusting motor (21) and a reduction gear driving each rear wheel (6, 7) directly, characterised in that each hydrostatic drive unit (17a, 17b) comprises a planet-wheel shift gear (23) driven by the hydraulic adjusting motor (21) and shiftable between extremely slow working travel and fast transport travel, and also comprises a planet-wheel system (46, 47, 48, 31) incorporated in the rear wheel (6, 7) and is constructed as a rear-wheel carrier which is secured to the substructure (8) and/or to the material-conveying track (9) on one side of the road finisher and extends externally over the material-conveying track (9).

2. A road finisher according to claim 1, characterised in that each hydrostatic drive unit (17a, 17b) comprises two parts (A, B) connected by a reduction-gear portion (24), the first part (A) comprises the planet-wheel shift gear (23) and the hydraulic adjusting motor (21), the second part (B), which contains the planet-wheel set (46, 47, 48) directly driving the rear wheel (6, 7), is incorporated in the rear wheel (6, 7), the first part (A) is axially offset upwards relatively to the wheel axle and relatively to the second part (B) over the material-conveying path, and the axial offset is bridged by the reduction-gear portion (24), which lies between the side wall of the material-conveying track (9) and the inside of the rear wheel (6, 7).

3. A road finisher according to claims 1 and 2, characterised in that the two hydrostatic drive units (17a, 17b) can be coupled by a hydraulic differential (19).

4. A road finisher according to claim 2, characterised in that the reduction-gear portion (24) is secured to the substructure (8) and/or to the material-conveying track (9).

5. A road finisher according to claims 1 and 2, characterised in that a brake (52), serving at least as an auxiliary or parking brake, is provided between the second part (B) of the hydrostatic drive unit (17a, 17b) and the rear wheel (6, 7), preferably in the second part (B) disposed in the rear wheel (6, 7).

6. A road finisher according to claim 5, characterised in that a power flow disconnecting device, e.g. a controllable clutch, is provided between the brake (52) and the hydraulic adjusting motor (21), and the brake (52) is constructed as a driver's brake for the road finisher (1).

7. A road finisher according to claims 1 and 2, characterised in that on each side of the road finisher, two driven rear wheels (6, 7), disposed one behind the other, are provided, each with a second part (B) of the hydrostatic drive unit (17a, 17b) incorporated in the wheel (6, 7), and the first part (A) of the hydrostatic drive unit (17a, 17b) common to the two rear wheels (6, 7) on one side of the road finisher is connected to the second parts (B) via a respective chain or gearwheel reduction-gear portion (24, 24', 24'').

8. A road finisher according to claims 1, 2 and 7, characterised in that the first part of the hydrostatic drive unit (17a, 17b) and its gearbox casing (22) are secured to the substructure (8) and/or to the material-conveying track (9).

9. A road finisher according to claims 1 to 8, characterised in that the second part (B) of the hydrostatic drive unit (17a, 17b) comprises a bell-shaped outer casing (31) connected to a rim dish (33) of the rear wheel (6, 7), the outer casing (31) extending over the inner gearbox casing (29), which is permanently connected to the gearbox casing (25, 25') of the reduction-gear portion (24, 24', 24'').

10. A road finisher according to claims 5, 6 and 9, characterised in that the brake (52) is disposed between the outer casing (31) and the inner gearbox casing (29).

11. A road finisher according to claims 1 to 10, characterised in that a clutch (K) shiftable between a cage transmission position (working travel) and a bridging position (transport travel) and, optionally, a disconnecting position, is provided in the planet-wheel shift gear (23).

12. A road finisher according to claim 11, characterised in that the clutch (K) comprises an internally and externally longitudinally toothed sliding sleeve (19) which is guided inside an internally longitudinally toothed driven planet wheel (42) on a longitudinally toothed input shaft (27) and an adjacent longitudinally toothed, coaxial output shaft (43) so as to be movable relative to the reduction-gear portion (24), and when the clutch (K) is in the cage transmission position the sleeve couples the driven planet wheel (42) to the output shaft (43), whereas in the bridging position it couples the input shaft (37) directly to the output shaft (43), bypassing the driven planet wheel (42).

13. A road finisher according to claims 1 and 12, characterised in that the hydraulic adjusting motor (21) is flanged on the first part (A) of the hydrostatic drive unit (17a, 17b), coaxially with the input shaft (37).

## Revendications

1. Finisseuse pour route (1) avec train de roues à pneus, avec un châssis (8) présentant un chemin de transport de matériaux (9) traversant longitudinal, un groupe moto-pompe d'entraînement central (14, 15), des roues avant dirigeables (5) ainsi que des roues arrière entraînées (6, 7), pour chaque côté de roues arrière étant prévus une unité d'entraînement hydrostatique (17a, 17b) propre avec un moteur de réglage hydraulique (21) et un démultiplicateur commandant directement chaque roue arrière (6, 7), caractérisée en ce que chaque unité d'entraînement hydrostatique (17a, 17b) présente un engrenage de vitesses à pignon planétaire (23), actionné par le moteur de réglage hydraulique (21), commutable entre déplacement de travail extrêmement lent et déplacement de transport rapide, et un jeu de pignons planétaires (46, 47, 48, 31) incorporé dans la roue arrière (6, 7) et se présente sous forme de porte-roue arrière qui est fixé, d'un côté de la finisseuse, sur le châssis (8) et/ou sur le chemin de transport de matériaux (9) et qui, de l'extérieur, vient en prise par-dessus le chemin de transport de matériaux (9).

2. Finisseuse suivant la revendication 1, caractérisée en ce que chaque unité d'entraînement hydrostatique (17a, 17b) se compose de deux parties (A, B) reliées par l'intermédiaire d'un segment de démultiplicateur (24), que la première partie (A) présente l'engrenage de vitesses à pignon planétaire (23) avec le moteur de réglage hydraulique (21), que la seconde partie (B) contenant le jeu de pignons planétaires (46, 47, 48) actionnant directement la roue arrière (6, 7) est incorporée dans la roue arrière (6, 7), que la première partie (A) est à axe décalé vers le haut, par le chemin de transport de matériaux (9), par rapport à l'axe des roues et par rapport à la seconde partie (B), et que le décalage d'axe est surplombé par le segment de démultiplicateur (24) qui se situe entre la limite latérale du chemin de transport de matériaux (9) et la face intérieure de la roue arrière (6, 7).

3. Finisseuse suivant les revendications 1 et 2, caractérisée en ce que les deux unités d'entraînement hydrostatiques (17a, 17b) peuvent être couplées par un différentiel hydraulique (19).

4. Finisseuse suivant la revendication 2, caractérisée en ce que le segment de démultiplicateur (24) est fixé sur le châssis (8) et/ou sur le chemin de transport de matériaux (9).

5. Finisseuse suivant les revendications 1 et 2, caractérisée en ce qu'entre la seconde partie (B) de l'unité d'entraînement hydrostatique (17a, 17b) et la roue arrière (6, 7) est prévu, de préférence dans la seconde partie (B) disposée dans la roue arrière (6, 7), un frein (52) au moins en tant que frein auxiliaire ou de blocage.

6. Finisseuse suivant la revendication 5, caractérisée en ce qu'entre le frein (52) et le moteur de réglage hydraulique (21) est prévu un dispositif d'interruption du flux d'énergie, par exemple un accouplement réglable, et que le frein (52) se présente sous forme de frein de fonctionnement de la finisseuse.

7. Finisseuse suivant les revendications 1 et 2, caractérisée en ce qu'il est prévu, par côté de la finisseuse, deux roues arrière (6, 7) entraînées, situées l'une derrière l'autre, avec, chacune, une seconde partie (B) de l'unité d'entraînement hydrostatique (17a, 17b) incorporée dans la roue (6, 7), et que la première partie (A) de l'unité d'entraînement hydrostatique (17a, 17b), commune aux deux roues arrière (6, 7) d'un côté de la finisseuse, est reliée aux deux secondes parties (B) par l'intermédiaire de chaque fois un segment de démultiplicateur (24, 24', 24'') à chaîne ou à roue dentée.

8. Finisseuse suivant les revendications 1, 2, 7, caractérisée en ce que la première partie (A) de l'unité d'entraînement hydrostatique (17a, 17b) est fixée, par son carter d'engrenage (22), sur le châssis (8) et/ou sur le chemin de transport de matériaux (9).

9. Finisseuse suivant les revendications 1 à 8, caractérisée en ce que la seconde partie (B) de l'unité d'entraînement hydrostatique (17a, 17b) présente un carter extérieur (31) en forme de cloche et assemblé à un plateau de jante (33) de la roue arrière (6, 7), qui vient en prise par-dessus un carter d'engrenage intérieur (29) solidaire du segment de démultiplicateur (24, 24', 24'').

10. Finisseuse suivant les revendications 5, 6 et 9, caractérisée en ce que le frein (52) est disposé entre le carter extérieur (31) et le carter d'engrenage intérieur (29).

11. Finisseuse suivant les revendications 1 à 10, caractérisée en ce que dans l'engrenage de vitesses à roue planétaire (23) est prévu un accouplement (K) commutable entre une position de transmission de base (déplacement de travail) et une position de pontage (déplacement de transport), et éventuellement une position de déconnexion.

12. Finisseuse suivant la revendication 11, caractérisée en ce que l'accouplement (K) présente un manchon coulissant (49) à denture longitudinale intérieure et extérieure qui est guidé, de manière déplaçable par rapport au segment de démultiplicateur (24), dans un pignon planétaire de déconnexion (42), sur un arbre d'entrée (37) à denture longitudinale et un arbre de sortie (43) coaxial à denture longitudinale, lequel couple, dans la position de transmission de base de l'accouplement (K), le pignon planétaire de déconnexion (42) à l'arbre de sortie (43) et couple, dans la position de pontage, l'arbre d'entrée (37), en contournant le pignon planétaire de déconnexion (42), directement à l'arbre de sortie (43).

13. Finisseuse suivant les revendications 1 et 12, caractérisée en ce que le moteur de réglage hydraulique (21) est, coaxialement à l'arbre d'entrée (37), raccordé par bride à la première partie (A) de l'unité d'entraînement hydrostatique (17a, 17b).
